# EUROPEAN PATENT APPLICATION

(11) **EP 1 642 938 A1**
(43) Date of publication of application: **05.04.2006**
(21) Application number: 05255546.3
(22) Date of filing: 09.09.2005
(51) Int. Cl.: C09B 67/00

(54) **Process for the production of pigment composition and printing ink containing pigment composition obtained**

(30) Priority: 10.09.2004 JP 2004263417
(71) Applicant: TOYO INK MFG. CO., LTD., Tokyo (JP)
(72) Inventor: Imagawa, Ippei, c/o Toyo Ink MFG Co., Ltd,, Tokyo 104-0031 (JP); Chiba, Ataru, c/o Toyo Ink MFG Co., Ltd,, Tokyo 104-0031 (JP)
(74) Representative: Srinivasan, Ravi Chandran

(57) **Abstract**

A process for the production of a pigment composition comprising dry-milling an organic pigment in the presence of a resin, which process aims to improve dispersibility and dispersing stabilization and is capable of giving a pigment composition for a printing ink excellent in fluidity, wherein the resin comprises a resin for a printing ink and an α-olefin - ethylenic unsaturated group-containing dicarboxylic acid copolymer or its modified product and 10 to 50 parts by weight of the resin for a printing ink and 1 to 30 parts by weight of the α-olefin - ethylenic unsaturated group-containing dicarboxylic acid copolymer or its modified product are used per 100 parts by weight of the organic pigment, and a printing ink containing a pigment composition obtained according to the above process as a colorant.

## Description

### Field of the Invention

The present invention relates to a process for the production of a pigment composition suitable for use in a printing ink and a pigment composition obtained by the above process. More specifically, it relates to a process for the production of a pigment composition improved in pigment dispersibility and fluidity obtainable by dry-milling an organic pigment with a resin, and a pigment composition.

### Background of the Invention

With regard to pigments for printing inks, in particular phthalocyanine pigments, it is known that pigments having excellent quality can be produced at low cost and with a decreased environmental loading according to a pigmentation method comprising dry-milling a pigment together with a resin (JP-A-09-272833) . However, pigments produced by pulverization such as dry-milling are highly inhomogeneous in terms of a particle diameter and a particle form when compared with pigments obtained by other processes having a high particle-size-controlling effect, for example pigments obtained by being ground together with a milling aid such as a salt or a crystal growth promoter such as diethylene glycol in a kneader. These inhomogeneities have adverse effects on the dispersion stabilization of pigments in inks and sometimes cause a decrease in the fluidity of inks or a decrease in gloss.

On the other hand, there is a potential need for decreasing costs required for the production or distribution of inks by producing a base ink having a high pigment content. However, since a high-degree dispersion stabilization of pigments is required, its actualization is difficult.

### Summary of the Invention

It is an object of the present invention to provide a process for the production of a pigment composition for a printing ink excellent in fluidity which process improves dispersibility and dispersion stabilization, a pigment composition obtained by the above process and a printing ink containing the above pigment composition.

The present invention provides a process for the production of a pigment composition which process comprises dry-milling an organicpigment with a resin, the resin comprising a resin for a printing ink and an α-olefin- ethylenic unsaturated group-containing dicarboxylic acid copolymer or its modified product.

The present invention further provides a process according to the above process, wherein the amount of the organic pigment is 100 parts by weight, the amount of the resin for a printing ink is 10 to 50 parts by weight and the amount of the α-olefin - ethylenic unsaturated group-containing dicarboxylic acid copolymer or its modified product is 1 to 30 parts by weight.

The present invention furthermore provides a pigment composition obtained by the above process.

The present invention still further provides a printing ink containing the above pigment composition as a colorant.

### Effect of the Invention

The pigment composition obtained according to the process of the present invention shows excellent fluidity, makes it possible to increase a pigment content in ink and at the same time improves the quality of a printing ink such as dispersibility or gloss.

### Detailed Description of the Invention

The process for the production of a pigment composition, provided by the present invention, is a production process wherein at least three components, which are an organic pigment, a resin for a printing ink and an α-olefin - ethylenic unsaturated group-containing dicarboxylic acid copolymer or its modified product, are substantially concurrently dry-milled.

In the dry-milling, there may be adopted a method in which the at least three components are one by one added so long as it includes a step in which all the above three components are concurrently dry-milled.

A dry-milling machine can be selected from a dry type attritor, a ball mill, a vibrating mill, and the like. Each of these dry-milling machines has its own rational media amount, material amount and milling time. Color development increases with an increase in the milling time of the pigment. However, when a milled pigment composition is used for preparing an ink, it is required to decide the milling time in consideration of the condition of the ink. Excessivemilling causes deterioration in dispersibility and a decrease in the fluidity of the ink.

The milling temperature is typically from room temperature to 170 °C, preferably from 40 °C to 100 °C. As for factors to decide the milling temperature, a factor is the softening point of resin to be used. Further, in the case of a copper phthalocyanine pigment whose crystals convert during the milling, a factor is its crystal conversion property. Under a high temperature close to the softening point, fusing of the resin occurs inside a milling machine due to softening of the resin, which may cause a problem in production. However, even when the resin softens, no problem in production arises according to the amount of the resin used, in some cases. Further, when the organic pigment is a copper phthalocyanine, α type crystals generate by milling. On the other hand, conversion into stable β type crystals advances due to heat at the same time. Milling under a high temperature is preferable for obtaining a pigment composition abundant with β type crystals which are generally useful for printing inks.

The organic pigment used in the present invention can be selected from azo pigments, phthalocyanine pigments and fused polycyclic pigments such as quinacridone pigments, isoindolinone pigments and threne pigments. In particular, the effect of the present invention on phthalocyanine pigments or azo yellow pigments is high.

The resin for a printing ink used in the present invention includes a rosin-modified phenol resin, a rosin-modifiedmaleic acidresin, analkydresin, an alkyl phenol resin and a petroleum resin. The rosin-modified phenol resin is preferably used. These resins may be used alone or in combination. These resins increase the deflocculation property of the pigment into a varnish when the pigment composition is used to obtain an ink. The resin for a printing ink is selected in consideration of the relation to the physical properties of a printing ink to be obtained, i.e., the compatibility with a varnish to be used or the viscosity when dissolved.

The amount of the resin for a printing ink per 100 parts by weight of the organic pigment is 10 to 50 parts by weight, preferably 20 to 50 parts by weight. When the amount of the resin for a printing ink is too small, the deflocculation property of the pigment in the varnish decreases. When it is too large, the productivity per the amount of the organic pigment decreases or the general versatility of the pigment composition to the varnish decreases in some cases.

It is presumed that the surface of the pigment is treated with the α-olefin - ethylenic unsaturated group-containing dicarboxylic acid copolymer or its modified product during the dry-milling, which contributes to an increase in the dispersibility of the pigment in the varnish and the stabilization of dispersion. Owing to the above, it becomes possible to improve a quality such as fluidity or gloss, each of which is liked with the dispersibility, and increase the rate of the content of the pigment.

The mechanism of the function of the above copolymer as a dispersing agent is presumed as follows. That is, a dicarboxylic acid group or its anhydride group, which is a polar part of the copolymer, increases the adsorption of the copolymer to the pigment surface and at the same time an α-olefin chain, which is a non-polar part, increases the compatibility with varnish, whereby the above copolymer exhibits the function as a dispersing agent. Although the above-mentioned resin for a printing ink also increases the deflocculation property and accordingly increases the dispersibility, its adsorption ability to the pigment surface is weak. Therefore, the resin for a printing ink is not able to exhibit an effect equivalent to the effect that the above copolymer exhibits.

When the copolymer is not added at the dry-milling time but is added at the time of ink-preparation of the pigment, the dispersibility-increasing effect of the present invention is not obtained. The reason is as follows. The copolymer has ahighpolarity so that the copolymer itself is poor in solubility in a varnish for a printing ink, which is generally non-polar. Therefore, when the above copolymer is added at the ink-preparation time, the adsorption to the pigment surface can hardly advance. We have presumed that since a dicarboxylic acid group or its anhydride group of the copolymer is oriented to the pigment side by dry-milling the pigment together with the copolymer to advance the adsorption and, as a result, to hide a polar part of the copolymer from the varnish side, the solubility in the varnish is not impaired.

The α-olefin which constitutes the copolymer is selected from α-olefines having different carbon numbers. α-olefines having about 10 to 30 carbon atoms have high compatibility with a currently-mainstream varnish for a printing ink. It is required to select the carbon number in consideration of the compatibility with the varnish and the selection of the carbon number depends upon varnish to be used.

The ethylenic unsaturated group-containing dicarboxylic acid which constitutes the copolymer is typically a maleic acid, a fumaric acid and anhydrides of these.

Themethod for copolymerization is selected from known copolymerization methods. That is, it includes block polymerization, solution polymerization and suspension polymerization. The block polymerization is preferable in view of economic performances and a polymerization degree. The molecular weight of the copolymer is preferably about 5,000 to 50,000 g/mol, as a weight average molecular weight by GPC, for a printing ink.

As the modified product of the copolymer, there may be used modified products obtained by esterification or amidation by use of the reactivity of a dicarboxylic acid group of the copolymer or its anhydride group for the purpose of adjusting the compatibility with the varnish or the pigment.

Examples of a compound which is usable to the modification include an aliphatic monoalcohol having 3 to 50 carbon atoms, an aliphatic monoamine having 3 to 50 carbon atoms, a polyethylene glycol having a molecular weight of 1,000 or less, a polypropylene glycol having a molecular weight of 1,000 or less, monoalkyl ether of a random condensate of ethylene glycol and propylene glycol, and compounds containing a hydroxyl group or an amino group such as β-naphthol and aniline.

The esterification or amidation is carried out by a known method. That is, it is carried out in the presence of a catalyst by thermal dehydration under a reduced pressure. The modification amount is 50 mol % or less based on the dicarboxylic acid group or its anhydride group.

The amount of the copolymer per 100 parts by weight of the organic pigment is from 1 to 30 parts by weight, preferably from 5 to 20 parts by weight. When the amount of the copolymer is increased, the effect of improving fluidity becomes large. However, the improving effect is saturated when it exceeds a certain amount.

It is possible to incorporate a small amount of an additive into the pigment composition of the present invention during or after the dry-milling. Examples of the additive include an antioxidant, a variety of conditioners to be added for a printing ink and a solvent.

A printing ink is produced by using the pigment composition of the present invention as follows. The pigment composition and a varnish for a printing ink and optionally a solvent for a printing ink are mixed under heat and then the pigment is dispersed with a bead mill, a three-roll mill or the like to prepare a base ink. Then the condition of the ink is adjusted to obtain an end-product ink.

The mixing under heat of the pigment composition and the varnish for a printing ink is carried out for dispersing the pigment composition in the varnish and, when an unstable or metastable crystal form of the pigment has been generated by the dry-milling, for converting the unstable or metastable crystal form into a stable crystal form with heat or solvent. In the case of a copper phthalocyanine, for example, an α type crystal form is generated by dry-milling but the α type crystal form is converted into a β type crystal form, which is a more stable crystal form, by mixing with the varnish under heat.

The heating temperature is decided from the viewpoints of the solubility of the resin contained in the pigment composition, a crystal conversion property when crystal conversion is intended, and productivity. The heating temperature is generally from 30 °C to 200 °C. In many cases, it is sufficient to select a temperature in the range of from 80 °C to 130 °C.

As for the mixing conditions, it is sufficient to select conditions under which the mixture of the pigment composition and the varnish can be stirred. By using a mixer which is capable of giving shearing energy such as a kneader or a bead mill, it is possible to shorten the time required for this step and decrease a time or energy load in the pigment-dispersing step. The mixing time varies depending upon the dispersibility of the composition, the conversion property of the pigment and, in addition, the constitution of the varnish. However, the mixing is completed about from several tens of minutes to 3 hours. The resultant mixture is processed with a dispersing machine, whereby the preparation of the base ink is finished.

The varnish for a printing ink can be selected from known varnishes. Generally, the main components of a varnish can be separated into a solvent and a resin. Examples of the solvent include a high-boiling point petroleum solvent, an aliphatic hydrocarbon solvent, a higher alcohol solvent, and drying oils and polymerized drying oils such as soybean oil, tung oil and linseed oil. These varnishes may be used alone or in combination.

Further, the resin used in the varnish for a printing ink can be selected from resins suitable for a printing ink such as a rosin-modified phenol resin, a rosin-modified maleic acid resin, an alkyd resin, an alkyl phenol resin and a petroleum resin. These resins may be used alone or in combination.

The present invention will be specifically explained with reference to Examples and Comparative Examples hereinafter, in which "part" stands for "part by weight".

An attritor having a tank volume of 0.75 L was used for dry-milling. 2 kg of 3/8 inch steal beads were filled into the attritor. The rotational speed for milling was 360 rpm. The dry-milling was carried out by circulating a 70°C-heating medium.

### (Production Example 1)

649 parts of Dialen 124 (a mixture of α-olefines C12 and C14 supplied by Mitsubishi Chemical Corporation) was charged into a synthesis container. The atmosphere in the container was replaced with nitrogen. Then, the temperature of Dialen was increased to 150 °C. 4.3 parts of di-t-butylperoxide was divided into seven equal portions and the seven equal portions were one by one added every 20 minutes. 369 parts of maleic anhydride was divided into 24 equal portions and the 24 equal portions were one by one added every 5 minutes. After the completion of the additions of the di-t-butylperoxide and the maleic anhydride, the resultant mixture was stirred under heat at 150 °C for 1 hour and then it was temperature-increased to 180 °C. 1.1 parts of di-t-butylperoxide was added and, 2 hours later, 1.1 parts of di-t-butylperoxide was further added. The resultant mixture was further stirred under heat at 180 °C for 3 hours and then pressure-reducing deaeration was carried out, to obtain anα-olefin -maleic anhydride copolymer. The copolymer was measured for a molecular weight by means of GPC. Its weight average molecular weight was 1.0 × 10⁴ g/mol.

### (Production Example 2)

775 parts of Dialen 208 (a mixture of α-olefines C20 - C28 supplied by Mitsubishi Chemical Corporation) was charged into a synthesis container. The atmosphere in the container was replaced with nitrogen. Then, the temperature of Dialen was increased to 150 °C. 2.92 parts of di-t-butylperoxide was divided into seven equal portions and the seven equal portions were one by one added every 20 minutes. 250.2 parts of maleic anhydride was divided into 24 equal portions and the 24 equal portions were one by one added every 5 minutes. After the completion of the additions of the di-t-butylperoxide and the maleic anhydride, the resultant mixture was stirred under heat at 150 °C for 1 hour and then it was temperature-increased to 180 °C. 0.73 part of di-t-butylperoxide was added and, 2 hours later, 0.73 part of di-t-butylperoxide was further added. The resultant mixture was further stirred under heat at 180 °C for 3 hours and then pressure-reducing deaeration was carried out, to obtain anα-olefin-maleic anhydride copolymer. The copolymer was measured for a molecular weight by means of GPC. Its weight average molecular weight was 2.6 × 10⁴ g/mol.

### (Production Example 3)

100 parts of the copolymer obtained in the Production Example 1 was charged into a synthesis container. The copolymer was heated up to 150 °C under a nitrogen inflow. 26.7 parts of PEG750 (polyethylene glycol monomethyl ether; molecular weight 750, supplied by Aldrich) was added and the mixture was stirred under heat for 1 hour. Then, 0.1 part of p-toluene sulfonic acid sodium salt was added and the mixture was temperature-increased to 170 °C under a pressure-reducing deaeration and then stirred under heat for 3 hours, to obtain a PEGmodifiedproduct of α-olefin-maleic anhydride copolymer.

### [Example 1]

70 g of a crude copper phthalocyanine, 14 g of a rosin-modified phenol resin Tamanol 366, supplied by Arakawa Chemical Industries, Ltd., and 3.5 g of the copolymer obtained in Production Example 1 were charged into an attritor and the mixture was dry-milled for 45 minutes, to obtain a pigment composition. 19.4 parts of the pigment composition, 37.9 parts of SPARKLE 73 (varnish supplied by Eastman Chemical), 3.0 parts of linseed oil and PKWF 28/31af new (petroleum solvent supplied by Haltermann Products) were stirred at 130 °C for 1 hour. Then, the mixture was kneaded with a three-roll mill, and it was confirmed with a grindmeter that dispersed particles were 7.5 µm or less in size, whereby a base ink was prepared. 16.2 parts of SPARKLE 73 and 10 parts of PKWF 28/31af new were added to 66.3 parts of the base ink. Further, SPARKLE 73 and PKWF 28/31af new were added such that tackiness became 6.5. The total of all the components was 100 parts. The tackiness was measured with a digital inkometer, supplied by Toyo Seiki Seisaku-sho, Ltd., at an ink volume of 1.3 ml at a roll rotational speed of 400 rpm and at 30 °C.

### (Comparative Example 1)

70 g of a crude copper phthalocyanine and 17.5 g of a rosin-modified phenol resin Tamanol 366, supplied by Arakawa Chemical Industries, Ltd., were charged into an attritor and the mixture was dry-milled for 45 minutes, to obtain a pigment composition. 19.4 parts of the pigment composition, 37.9 parts of SPARKLE 73, 3.0 parts of linseed oil and PKWF 28/31af new were stirred at 130 °C for 1 hour. Then, the mixture was kneaded with a three-roll mill, and it was confirmed with a grindmeter that dispersed particles were 7.5 µm or less in size, whereby a base ink was prepared. 16.2 parts of SPARKLE 73 and 10 parts of PKWF 28/31af new were added to 66.3 parts of the base ink. Further, SPARKLE 73 and PKWF 28/31af new were added such that tackiness became 6.5. The total of all the components was 100 parts.

### (Comparative Example 2)

70 g of a crude copper phthalocyanine and 14 g of a rosin-modified phenol resin Tamanol 366, supplied by Arakawa Chemical Industries, Ltd., were charged into an attritor and the mixture was dry-milled for 45 minutes, to obtain a pigment composition. 18.6 parts of the pigment composition, 0.8 part of the copolymer obtained in Production Example 1, 37.9 parts of SPARKLE 73, 3.0 parts of linseed oil and PKWF 28/31af new were stirred at 130 °C for 1 hour. Then, the mixture was kneaded with a three-roll mill, and it was confirmed with a grindmeter that dispersed particles were 7.5 µm or less in size, whereby a base ink was prepared. 16.2 parts of SPARKLE 73 and 10 parts of PKWF 28/31af new were added to 66.3 parts of the base ink. Further, SPARKLE 73 and PKWF 28/31af new were added such that tackiness became 6.5. The total of all the components was 100 parts.

### [Example 2]

70 g of a crude copper phthalocyanine, 17.5 g of a rosin-modified phenol resin Tamanol 366, supplied by Arakawa Chemical Industries, Ltd., and 7 g of the copolymer obtained in Production Example 2 were charged into an attritor and the mixture was dry-milled for 45 minutes, to obtain a pigment composition. 17.01 parts of the pigment composition and 18.99 parts of a varnish for an offset printing press ink (varnish composed of a rosin-modified phenol resin, a petroleum resin, an alkyd resin, a nonaromatic petroleum solvent and linseed oil) were stirred at 130 °C for 1 hour. Then, the mixture was kneaded with a three-roll mill, and it was confirmed with a grindmeter that dispersed particles were 7 . 5 µm or less in size, whereby a base ink was prepared. 59 parts of a varnish for an offset printing press ink was added to 36 parts of the base ink. Further, a varnish for an offset printing press ink and a nonaromatic petroleum solvent were added such that tackiness became 4.7. The total of all the components was 100 parts.

### (Comparative Example 3)

70 g of a crude copper phthalocyanine and 24.5 g of a rosin-modified phenol resin Tamanol 366, supplied by Arakawa Chemical Industries, Ltd., were charged into an attritor and the mixture was dry-milled for 45 minutes, to obtain a pigment composition. 17.01 parts of the pigment composition and 18.99 parts of a varnish for an offset printing press ink, which was the same as the varnish used in Example 2, were stirred at 130 °C for 1 hour. Then, the mixture was kneaded with a three-roll mill, and it was confirmed with a grindmeter that dispersed particles were 7.5 µm or less in size, whereby a base ink was prepared. 59 parts of a varnish for an offset printing press ink was added to 36 parts of the base ink. Further, a varnish for an offset printing press ink and a nonaromatic petroleum solvent were added such that tackiness became 4.7. The total of all the components was 100 parts.

### [Example 3]

70 g of Pigment Yellow 12 having a specific surface area of 33 m²/g, 28 g of a rosin-modified phenol resin Tamanol 366, supplied by Arakawa Chemical Industries, Ltd., and 14 g of the copolymer obtained in Production Example 3 were charged into an attritor and the mixture was dry-milled for 45 minutes, to obtain a pigment composition. 24.8 parts of the pigment composition, 33.7 parts of SPARKLE 609 (varnish supplied by Eastman Chemical), 3.1 parts of linseed oil and 4.7 parts of PKWF 4/7af new (petroleum solvent supplied by Haltermann Products) were stirred at 80 °C for 1 hour. Then, the mixture was kneaded with a three-roll mill, and it was confirmed with a grindmeter that dispersed particles were 7.5 µm or less in size, whereby a base ink was prepared. 19.3 parts of SPARKLE 609 and 10 parts of PKWF 4/7af new were added to 66.3 parts of the base ink. Further, SPARKLE 609 and PKWF 4/7af new were added such that tackiness became 7.0. The total of all the components was 100 parts.

### (Comparative Example 4)

70 g of Pigment Yellow 12 having a specific surface area of 33 m²/g and 42 g of a rosin-modified phenol resin Tamanol 366, supplied by Arakawa Chemical Industries, Ltd., were charged into an attritor and the mixture was dry-milled for 45 minutes, to obtain a pigment composition. 24.8 parts of the pigment composition, 33.7 parts of SPARKLE 609, 3.1 parts of linseed oil and 4.7 parts of PKWF 4/7af new were stirred at 80 °C for 1 hour. Then, the mixture was kneaded with a three-roll mill, and it was confirmed with a grindmeter that dispersed particles were 7.5 µm or less in size, whereby a base ink was prepared. 19.3 parts of SPARKLE 609 and 10 parts of PKWF 4/7af new were added to 66.3 parts of the base ink. Further, SPARKLE 609 and PKWF 4/7af new were added such that tackiness became 7.0. The total of all the components was 100 parts.

With regard to the printing inks obtained in Examples 1 to 3 and Comparative Examples 1 to 4, Table 1 shows the viscosity of the base inks, the fluidity of the end-product inks and the Macbeth density and gloss of printed matters.

The evaluation of fluidity of the printing inks was carried out as follows. A measuring apparatus had an integrated structure of a domed inkpot (about 2 ml) and a flow board. The leaning angle of the flow board could be arbitrarily adjusted from the horizontal to the vertical. In a measurement, first, the flow board was adjusted horizontally, the inkpot was exactly filled with a well-kneaded ink for evaluation, it was allowed to stand at 25 °C for 1 hour, and then the flow board was leaned vertically. Inks excellent in fluidity dripped from the inkpot with time. Inks extremely poor in fluidity remained in the inkpot and did not drip. The length of ink dripped was measured 10 minutes later after leaning the flow board vertically. As the dripped ink length becomes longer, the fluidity is considered to be better. Printings were carried out with an IGT printability tester, model number C1-5, at a weight of 250N and at an ink amount of 160 mg.

**Table 1**

| | Base ink | | End-product ink | | |
|---|---|---|---|---|---|
| | Base ink pigment density | Base ink density (Pas) at 2.5^{s-1} 40°C | Fluidity (cm) | Macbeth density | Gloss |
| Ex.1 | 23.4 % | 280 | 8.7 | 1.93 | 74.1 |
| CEx.1 | 23.4 % | 891 | 0.1 | 1.74 | 67.2 |
| CEx.2 | 23.4 % | 860 | 0.2 | 1.75 | 68.1 |
| Ex.2 | 35.0% | 285 | 7.7 | 1.63 | 69.3 |
| CEx.3 | 35.0 % | Could not measured since it was too high | 0.1 | 1.48 | 68.2 |
| Ex.3 | 23.4 % | 315 | 6.0 | 1.30 | 65.5 |
| CEx.4 | 23.4 % | 767 | 0.2 | 1.15 | 60.6 |

| | | | | | |
|---|---|---|---|---|---|
| EX. = Example, CEx. = Comparative Example | | | | | |

## Claims

1. A process for the production of a pigment composition which process comprises dry-milling an organic pigment with a resin, the resin comprising (i) a resin for a printing ink and (ii) a copolymer comprising units derived from (a) an α-olefin and (b) a dicarboxylic acid, or an anhydride thereof, which contains an ethylenic unsaturated group, or a derivative of said copolymer.

2. A process according to claim 1, wherein the organic pigment is a phthalocyanine pigment or an azo yellow pigment.

3. A process according to claim 1 or 2, wherein the resin for a printing ink is a rosin-modified phenol resin.

4. A process according to any one of the preceding claims, wherein the α-olefin (a) has 10 to 30 carbon atoms.

5. A process according to any one of the preceding claims, wherein the dicarboxylic acid or anhydride (b) is maleic acid, maleic anhydride, fumaric acid or fumaric anhydride.

6. A process according to any one of the preceding claims, wherein the amount of the organic pigment is 100 parts by weight, the amount of the resin for a printing ink (i) is 10 to 50 parts by weight and the amount of the copolymer or derivative thereof (ii) is 1 to 30 parts by weight.

7. A process according to any one of the preceding claims, wherein the derivative of the copolymer (ii) is a product obtainable by reacting the copolymer with a C₃-C₅₀ aliphatic monoalcohol, a C₃-C₅₀ aliphatic monoamine, a polyethylene glycol having a molecular weight of 1000 or less, a polypropylene glycol having a molecular weight of 1000 or less, a polyalkylene glycol having a molecular weight of 1000 or less, in which each alkyl moiety is the same or different and is ethylene or propylene, β-naphthol or aniline.

8. A pigment composition obtainable by a process defined in any one of the preceding claims.

9. A printing ink containing, as a colorant, a pigment composition according to claim 8.

10. Use of a copolymer or a derivative thereof, as defined in any one of claims 1 to 7, to disperse an organic pigment as defined in claim 1 or 2 in a printing ink.
